# EUROPÄISCHE PATENTSCHRIFT

(11) **EP 0 847 627 B1**
(45) Veröffentlichungstag und Bekanntmachung des Hinweises auf die Patenterteilung: **07.07.1999**
(21) Anmeldenummer: 96909065.3
(22) Anmeldetag: 18.04.1996
(51) Int. Cl.: H03M 13/00

(54) **DATENDECODER**
DATA DECODER
DECODEUR DE DONNEES

(30) Priorität: 16.08.1995 DE 19529983
(43) Veröffentlichungstag der Anmeldung: 17.06.1998
(73) Patentinhaber: ROBERT BOSCH GMBH, 70442 Stuttgart (DE)
(72) Erfinder: ALBERTY, Thomas, D-71522 Backnang (DE)
(86) Internationale Anmeldenummer: DE9600679
(87) Internationale Veröffentlichungsnummer: WO9707595

(56) Entgegenhaltungen:
- WO-A-95/15638
- GB-A- 2 217 554
- GB-A- 2 271 489
- US-A- 5 111 483
- PATENT ABSTRACTS OF JAPAN vol. 18, no. 318 (E-1562), 16.Juni 1994 & JP,A,06 069968 (YOKOGAWA), 11.März 1994,
- PATENT ABSTRACTS OF JAPAN vol. 15, no. 46 (E-1029), 4.Februar 1991 & JP,A,02 278940 (MATSUSHITA), 15.November 1990,

## Beschreibung

### Stand der Technik

Bei der Übertragung von Datensignalen wird häufig Codierung verwendet, um z. B. eine Reduzierung der benötigten Sendeenergie pro Datenbit bei gleichbleibender Fehlerrate zu ermöglichen. Hauptaufgabe des einem Demodulator nachgeschalteten Datendecoders im Empfänger ist dabei die Bestimmung einer Folge von Datenbits d'ₖ aus der vom Demodulator gelieferten, eventuell mit Gütemaßen versehenen Folge von Schätzwerten c'ᵢ für die tatsächlich gesendeten Kanalsymbole cᵢ, so daß die Fehlerwahrscheinlichkeiten dieser Datenbits d'ₖ bezogen auf die tatsächlichen Datenbits dₖ der Quelle möglichst gering sind.

Ein Beispiel für einen solchen Decoder ist der in /1/ (Aufsatz von Forney "The Viterbi Algorithm", Proceedings of the IEEE, Band 61, Nr. 3, März 1973, Seiten 268-278) beschriebene Datendecoder, welcher auch als Viterbi-Decoder bezeichnet wird.

Eine zweite Aufgabe des Datendecoders kann die Unterstützung des Demodulators bei der Bestimmung der Schätzwerte c'ᵢ aus dem Empfangssignal r(t) sein. Ein Beispiel für eine solche Unterstützung ist in /2/ (Aufsatz von Ungerboeck "Channel Coding with Multilevel/Phase Signals", IEEE IT-28, Nr. 1, Januar 1982, Seiten 55-67, insbesondere Figur 17) beschrieben. Dabei bestimmt der Datendecoder zusätzlich zu der Folge der Datenbits d'ₖ eine Folge von verbesserten Schätzwerten c"ᵢ für die Kanalsymbole, die jedoch gegenüber der Folge der vom Demodulator gelieferten Schätzwerte c'ᵢ zeitverzögert ist. Die vom Datendecoder gelieferten Schätzwerte für die Kanalsymbole werden auch als "tentative decisions" bezeichnet. Durch die Rückkopplung der Schätzwerte c"ᵢ zum Demodulator entsteht jedoch ein Regelkreis, in welchem die genannte Zeitverzögerung problematisch ist. Darüber hinaus ergeben sich durch die Rückkopplung bei der Anfangssynchronisation Probleme, da der entstehende Regelkreis unter Umständen längere Zeit in labilen Gleichgewichcszuständen, den sogenannten "false locks", verweilen kann.

### Vorteile der Erfindung

Mit dem Verfahren nach dem unabhängigen Patentanspruch gelingt es, die Verzögerungszeit in dem enstehenden Regelkreis aus Demodulator und Datendecoder möglichst gering zu halten. Außerdem wird eine schnelle Anfangssynchronisation erreicht.

Dies beruht auf dem der Erfindung zugrunde liegenden Prinzip, nicht die volle Information über das zu einem bestimmten Zeitpunkt geschätzte Kanalsymbol vom Datendecoder zum Demodulator als Unterstützungssignale rückzukoppeln, sondern nur Informationen über geschätzte Gruppenzugehörigkeiten von übertragenen Kanalsymbolen oder Datendecoder-Zuständen etc.. Das Rückkoppeln eines reduzierten Informationsgehaltes reduziert störende Verzögerungen und Aufwand. Bei der Bildung von Gruppen (von Kanalsymbolen oder Zuständen) ist es übrigens nicht ausgeschlossen, daß einzelne Elemente einer Gruppe gleichzeitig auch zu einer anderen Gruppe gehören.

Vorteilhafte Ausgestaltungen der Erfindung ergeben sich aus den Unteransprüchen.

Die Erfindung geht von der Erkenntnis aus, daß für die Unterstützung des Demodulators nicht unbedingt Schätzwerte für die Kanalsymbole benötigt werden. In der parallelen Patentanmeldung "Verfahren zur Synchronisation" (PCT/DE96/00544) vom selben Anmelder ist gezeigt, daß auch Schätzwerte für die Zugehörigkeit zu einer Kanalsymbolgruppe zur Unterstützung des Demodulators verwendet werden können. Die Rückkopplung von Schätzwerten für die Zugehörigkeit zu einer Kanalsymbolgruppe anstelle von Schätzwerten für die Kanalsymbole gemäß der vorliegenden Erfindung hat folgende Vorteile: Diese Schätzwerte können mit einer geringeren Verzögerungszeit bestimmt werden, so daß die Laufzeitproblematik des Regelkreises entschärft wird. Es gibt weniger Kanalsymbolgruppen als Kanalsymbole, so daß weniger labile Gleichgewichtszustände existieren und daher die Amfangssynchronisation verbessert wird. Ferner ist die Entscheidung bezüglich einer Gruppenzugehörigkeit einfacher und damit aufwandsärmer. Außerdem wird dadurch die Schnittstelle zwischen Datendecoder und Demodulator einfacher und dadurch aufwandsärmer.

### Zeichnungen

Es folgt nun die Beschreibung eines einfachen Ausführungsbeispiels der Erfindung anhand der Figuren.

Figur 1 zeigt ein Prinzipschaltbild eines Übertragungssystems.

Figur 2 verdeutlicht die Lage der Kanalsymbole bei QPSK Modulation.

Figur 3 zeigt ein Zustandsübergangsdiagramm der Codierung, welches auch als "Trellis Diagramm" bezeichnet wird. In der

Figur 4 ist eine mögliche Realisierung der Bestimmung der Schätzwerte für die Zugehörigkeit zu einer Kanalsymbolgruppe gezeichnet, und

Figur 5 zeigt eine weitere mögliche Realisierung der Bestimmung der Schätzwerte für die Zugehörigkeit zu einer Kanalsymbolgruppe und der Bestimmung eines zusätzlichen Gütemaßes für diese Schätzwerte.

### Beschreibung von Ausführungsbeispielen

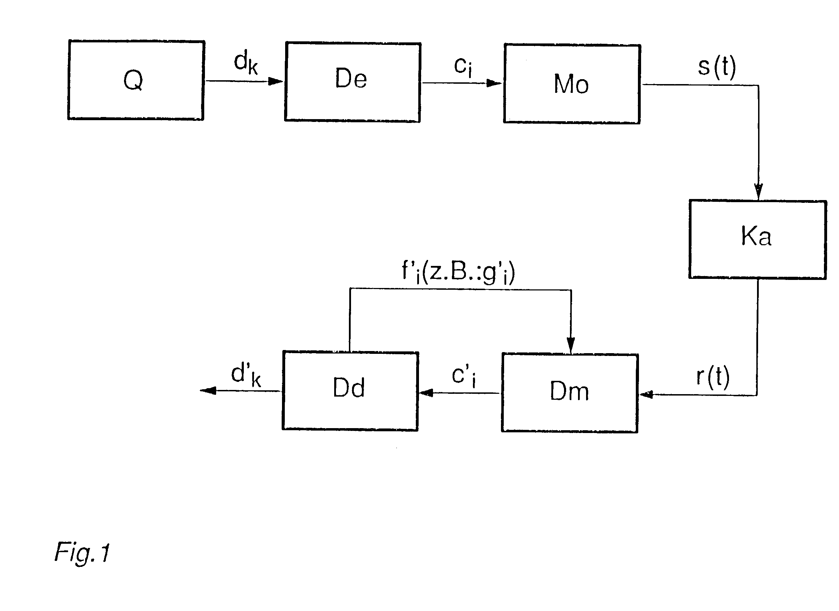

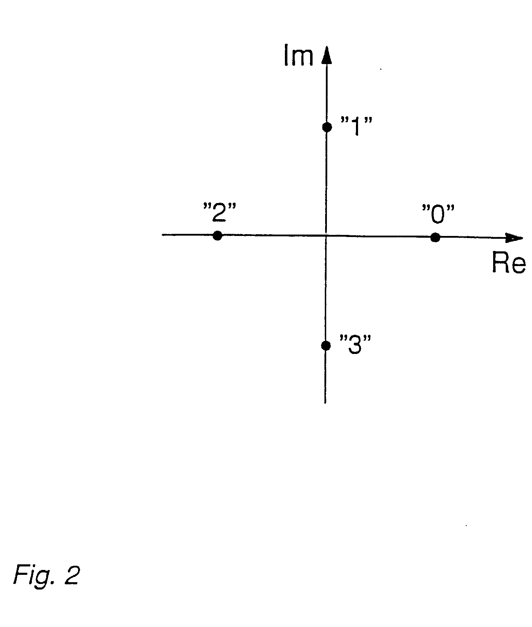

Gemäß Fig. 1 erzeugt eine Quelle Q eine Folge von Datenbits dₖ, welche einem Datenencoder De zugeführt wird. Dieser erzeugt eine Folge von Kanalsymbolen cᵢ, welche einem Modulator Mo zugeführt wird. Liegt der Übertragung z.B. eine QPSK-Modulation zugrunde, so sind die Kanalsymbole cᵢ Elemente eines vierstufigen Kanalsymbolalphabets, d.h. cᵢ ist ein Element der Menge {1, j, -1, -j}, wobei j die imaginäre Einheit ist. Diese vier möglichen Kanalsymbole sind in Fig. 2 als Punkte in der komplexen Ebene dargestellt. Der Modulator Mo erzeugt schließlich das eigentliche Sendesignal s(t) für die Übertragung über den Kanal Ka.

Beim Empfänger wird das Empfangssignal r(t) einem Demodulator Dm zugeführt. Dieser liefert die Folge von Schätzwerten c'ᵢ für die Kanalsymbole (eventuell mit Gütemaßen versehen), welche einem Datendecoder Dd zugeführt werden. Dieser bestimmt schließlich die Folge von geschätzten Datenbits d'ₖ. Darüber hinaus liefert er eine Folge von Werten f'ᵢ, welche dem Demodulator Dm zugeführt werden. Bei dem in der Literaturstelle /2/ angegebenen Verfahren wäre f'ᵢ eine Folge von verbesserten Schätzwerten c"ᵢ für die Kanalsymbole, während f'ᵢ bei dem erfindungsgemäßen Verfahren eine Folge von Schätzwerten g'ᵢ für die Zugehörigkeit zu einer Kanalsymbolgruppe ist, eventuell versehen mit entsprechenden Gütemaßen.

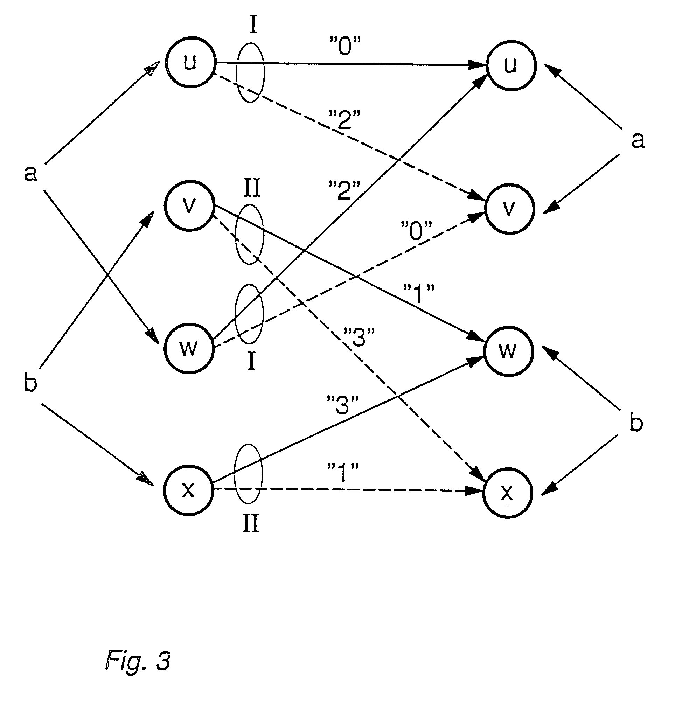

Zur Verdeutlichung des Prinzips der Bestimmung der Schätzwerte für die Gruppenzugehörigkeit ist in Fig. 3 ein einfaches Zustandsübergangsdiagramm für eine Faltungscodierung mit der Rate 1/2 bei QPSK dargestellt. Zu jedem Zeitpunkt befindet sich der Datenencoder De in einem der vier durch Kreise gekennzeichneten Zustände U, V, W, X. Erhält der Datenencoder De von der Quelle Q das nächste Datenbit dₖ, so folgt er bei dₖ=0 dem Pfad entsprechend dem durchgezogenen Pfeil, während er bei dₖ=1 dem gestrichelten Pfeil folgt. Dadurch wird der Übergang zum nächsten Zustand festgelegt. Die Ziffern an den Pfeilen kennzeichnen dabei jeweils das nächste Kanalsymbol, welches dem Modulator Mo zugeführt wird. Der Datendecoder Dd im Empfänger basiert ebenfalls auf diesem Zustandsübergangsdiagramm. Die Bestimmung der Folge d'ₖ ist dabei äquivalent zur Bestimmung des wahrscheinlichsten Pfades durch das Zustandsübergangsdiagramm. Dazu bestimmt der Datendecoder Dd in jedem Zeitpunkt i für jeden Zustand z eine sogenannte Pfadmetrik p_{z,i}, welche ein Maß für die Wahrscheinlichkeit dafür darstellt, daß der Pfad zum Zeitpunkt i durch diesen Zustand z verläuft (i = 0, 1, 2, 3, .... ) . Mit Hilfe des Schätzwertes c'ᵢ₊₁ vom Demodulator Dm, eventuell inklusive eines zugehörigen Gütemaßes, bestimmt der Datendecoder Dd dann die entsprechenden Pfadmetriken zum Zeitpunkt i+1. Diese Arbeitsweise ist in der Literaturstelle /1/ ausführlich beschrieben. Für die Beschreibung des der Erfindung zugrundeliegenden Verfahrens ist nur bedeutsam, daß diese Pfadmetriken p_{z,i} existieren, und daß sie ein Maß für die Wahrscheinlichkeiten der Zustände zum Zeitpunkt i sind.

Aus dem Zustandsübergangsdiagramm entnimmt man, daß von jedem Zustand aus nur jeweils zwei Kanalsymbole ausgehen. Unterteilt man das Kanalsymbolalphabet in zwei Kanalsymbolgruppen I und II, wobei die Kanalsymbolgruppe I die beiden Symbole "0" und "2", und die Kanalsymbolgruppe II die zwei Symbole "1" und "3" enthält, so können von jedem Zustand nur die Kanalsymbole einer Kanalsymbolgruppe ausgehen. Mit Hilfe der Pfadmetriken läßt sich also zum Zeitpunkt i ein Schätzwert für die Gruppenzugehörigkeit zum Zeitpunkt i+1 ableiten. Im einfachsten Fall wird dazu nur der momentan wahrscheinlichste Zustand bestimmt, und die zugehörige Kennzeichnung der Kanalsymbolgruppe, welche von diesem Zustand ausgehen kann, an den Demodulator Dm weitergeleitet. Bei der üblichen Darstellung der Pfadmetriken ist der wahrscheinlichste Zustand durch die minimale Pfadmetrik gekennzeichnet, so daß nur der Zustand mit der minimalen Pfadmetrik bestimmt werden muß.

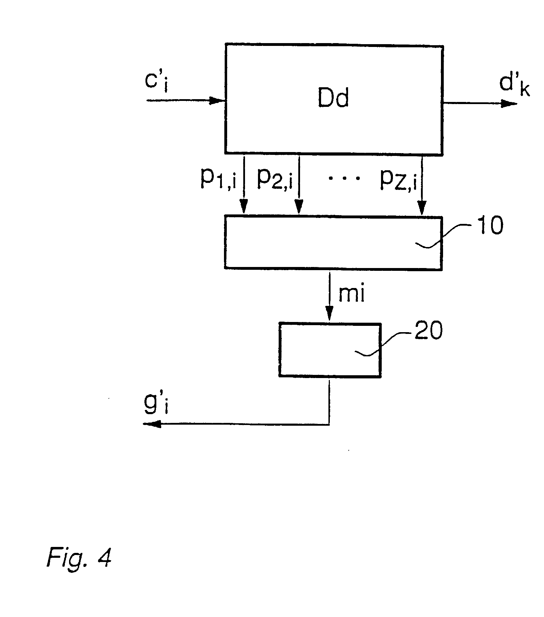

Dieses Prinzip ist in Fig. 4 dargestellt. Der Datendecoder Dd liefert zu jedem Zeitpunkt i die Pfadmetriken für alle Z Zustände, d.h. p_{1,i}, p_{2,i}, ...., p_{Z,i}, an die Verarbeitungseinheit 10, welche durch Vergleich der Pfadmetriken die Ordnungszahl oder sonstige Kennzeichnung mi des wahrscheinlichsten Zustands bestimmt. Für diesen Zustand ist die Pfadmetrik p_{mi,i} kleiner oder gleich allen anderen Pfadmetriken zum Zeitpunkt i. Der Verarbeitungsblock 20 muß dann nur noch die Kennzeichnung der zugehörigen Kanalsymbolgruppe g'ᵢ aus mi bestimmen. Dies kann z.B. durch eine einfache Tabelle realisiert werden, in welcher für jeden Zustand die zugehörige Kennzeichnung eingetragen ist.

Alternativ kann natürlich auch die Kennzeichnung mi für den wahrscheinlichsten Zustand zum Demodulator Dm zurückgeführt werden, welcher dann selbst die Kanalgruppe bestimmen kann.

Gemäß einer weiteren Alternative kann die Verarbeitungseinheit 10 eine Kennzeichnung nicht des wahrscheinlichsten, sondern des zweitwahrscheinlichsten oder beispielsweise des unwahrscheinlichsten Zustandes bestimmen und an einen alternativen Verarbeitungsblock 20 abgeben, der daraus geeignete Unterstützungssignale g'ᵢ bildet, wobei der Verarbeitungsblock 20 wiederum Teil des Demodulators Dm sein kann.

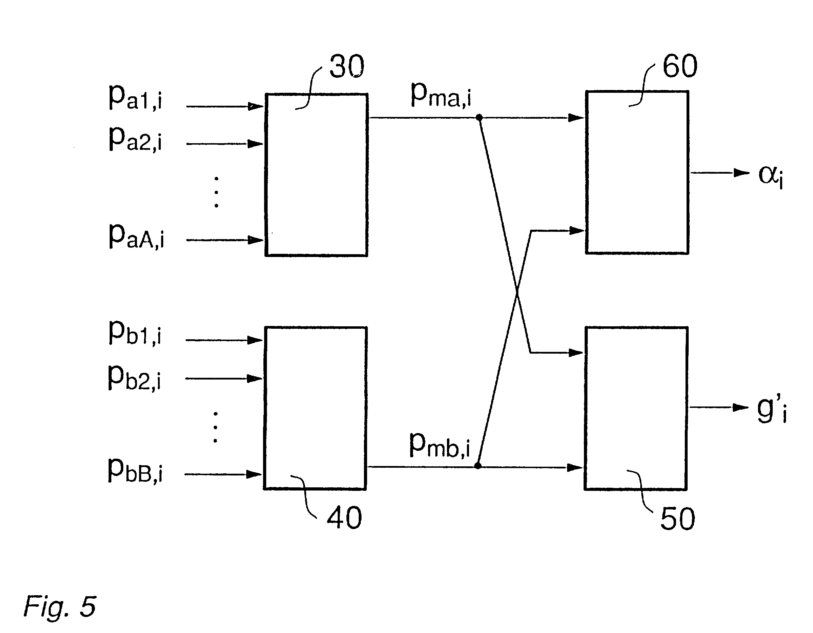

Aus den Pfadmetriken läßt sich aber auch ein Gütemaß der Entscheidung über die Gruppenzugehörigkeit ableiten. Ein besonders einfaches Verfahren ist in Fig. 5 für das Beispiel von zwei Kanalsymbolgruppen dargestellt, wobei auch ein alternatives Verfahren zur Bestimmung der Gruppenzugehörigkeit angegeben ist. Hierzu teilt man die Zustände in Zustandsgruppen auf. Entsprechend dem Zustandsübergangsdiagramm in Fig.2 ordnet man in diesem Fall zweckmäßigerweise die Zustände U und W der Zustandsgruppe a und entsprechend die Zustände V und X einer Zustandsgruppe b zu. Enthält die Zustandsgruppe a insgesamt A Zustände, so sollen die zugehörigen Pfadmetriken zum Zeitpunkt i im folgenden mit p_{a1,i}, p_{a2,i}, ...., p_{aA,i} gekennzeichnet werden. Diese Pfadmetriken führt man dem Verarbeitungsblock 30 zu, welcher die minimale Pfadmetrik p_{ma,i} dieser Zustandsgruppe bestimmt, d.h. p_{ma,i} =min(p_{a1,i}, p_{a2,i}, ...., p_{aA,i}). Entsprechend verfährt der Verarbeitungsblock 40 mit den Pfadmetriken p_{b1,i}, p_{b2,i}, ........., p_{bB,i} der Zustandgruppe b zum Zeitpunkt i, so daß man die Pfadmetrik p_{mb,i} des wahrscheinlichsten Zustands der Zustandsgruppe b erhält. Zur Bestimmung der wahrscheinlichsten Zustandsgruppe muß der Verarbeitungsblock 50 nur noch diese beiden Pfadmetriken miteinander vergleichen, und die entsprechende Kennzeichnung g'ᵢ der wahrscheinlichsten Zustandsgruppe ausgeben. Ein Maß für die Güte dieser Entscheidung ergibt sich z. B. aus dem Unterschied der beiden Pfadmetriken p_{ma,i} und p_{mb,i} der wahrscheinlichsten Zustände der Zustandsgruppen a und b. Die Güte der Entscheidung ist umso besser, je größer dieser Unterschied ist. Im einfachsten Fall wird im Verarbeitungsblock 60 also nur der Absolutbetrag der Differenz von p_{ma,i} und p_{mb,i} mit einer Schwelle verglichen. Überschreitet er die Schwelle, so liegt ein guter Schätzwert vor und das Gütemaß αᵢ wird z. B. auf "1" gesetzt. Unterschreitet er die Schwelle, so liegt ein schlechter Schätzwert vor, und das Gütemaß αᵢ wird z. B. auf "0" gesetzt.

Hat man mehr als zwei Zustandsgruppen, so könnte man ein einfaches Gütemaß entsprechend aus den Pfadmetriken der zwei wahrscheinlichsten Zustandsgruppen ableiten.

Falls die Verzögerungszeit nicht kritisch ist, so können natürlich auch verzögerte Entscheidungen über die Gruppenzugehörigkeit getroffen werden. Betrachtet man das Zustandsübergangsdiagramm in Fig. 3, so erkennt man, daß auch hinführend zu jedem Zustand U, V, W, X nur jeweils Kanalsymbole einer Kanalsymbolgruppe I bzw. II möglich sind. Man kann also auf die gleiche Art zum Zeitpunkt i einen Schätzwert für die Kanalsymbolgruppenzugehörigkeit zum Zeitpunkt i erhalten. Der Verarbeitungsblock 20 in Fig. 4 enthält dann entsprechend eine andere Tabelle. Entsprechend würde die Aufteilung der Zustandsgruppen in Fig. 5 anders ausfallen.

Können noch größere Verzögerungszeiten im Regelkreis toleriert werden, so kann man natürlich auch entsprechend dem in Literaturstelle /2/ beschriebenen Verfahren zunächst einen Schätzwert für das Kanalsymbol zu einem weiter zurückliegenden Zeitpunkt bestimmen. Aber auch in diesem Fall ist es sinnvoll, diese Entscheidung in eine Gruppenentscheidung zu überführen, z. B. mit einer Tabelle, da hierdurch weniger labile Gleichgewichtszustände des Regelkreises entstehen, und damit die Anfangssynchronisation unproblematischer wird. Aus dem Unterschied der Pfadmetriken läßt sich auch hier ein Maß für die Güte des Schätzwertes ableiten.

Statt dem Demodulator Dm eine Kennzeichnung für die wahrscheinlichste Gruppenzugehörigkeit, bzw. des wahrscheinlichsten Kanalsymbols mit oder ohne Gütemaß zuzuführen, kann man alternativ für jede mögliche Gruppe bzw. für jedes mögliche Kanalsymbol ein Gütemaß bestimmen und dem Demodulator Dm zuführen. Dann kann der Demodulator Dm alle Alternativen berücksichtigen und selbst eine angemessene Wichtung durchführen.

Eine Faltungscodierung mit Rate 1/2 bei QPSK wurde nur beispielhaft zur Verdeutlichung des Prinzips beschrieben. Das Verfahren ist ebenso bei der in Literaturstelle /2/ beschriebenen trelliscodierten Modulation, z. B. mit Rate 2/3 bei 8PSK oder Rate 3/4 bei 16PSK, insbesondere auch bei der in dem Aufsatz von Viterbi et al. "A Pragmatic Approach to Trellis-Coded Modulation", IEEE Communications Magazine, Juli 1989, Seiten 11-19 beschriebenen pragmatischen Trelliscodierten Modulation anwendbar. Ebenso ist die Anwendung bei Punktierung oder Blockcodierung möglich, wobei im ersten Fall eine zeitabhängige, entsprechend dem Punktierungsmuster periodisch wiederkehrende, Gruppeneinteilung erforderlich sein kann.

Aus der vorstehenden Beschreibung ist ersichtlich geworden, welches Prinzip der Erfindung mit ihren verschiedenen Ausgestaltungsmöglichkeiten zugrunde liegt: Zur Verkürzung von Laufzeiten der vom Datendecoder (Dd) zum Demodulator (Dm) zurückgeführten Unterstutzungssignale (g'ᵢ) weisen diese einen eingeschränkten Informationsgehalt auf, der sich beispielsweise in einer Information darüber erschöpfen kann, zu welcher von mehreren Gruppen von Kanalsymbolen (c'ᵢ) die übertragenen Kanalsymbole (c'ᵢ) schätzungsweise gehören oder in welcher Gruppe von Zuständen sich der Pfad durch das Trellisdiagramm gerade schätzungsweise befindet.

## Patentansprüche

1. Verfahren zur Beschränkung der Verzögerungszeit in einem Regelkreis aus Demodulator (Dm) und nachgeschaltetem Datendecoder (Dd) bei codierter Datenübertragung, durch Bereitstellung von Unterstützungssignalen zur Unterstützung des Demodulators (Dm) durch den Datendecoder (Dd), dadurch gekennzeichnet, daß aus Zuständen (U, V, W, X) des der Codierung zugrundeliegenden Zustandsübergangsdiagramms eine Anzahl N von nicht unbedingt gleich großen Gruppen (a, b) gebildet wird, daß fortlaufend Entscheidungen bezüglich der Gruppenzugehörigkeit des aktuellen Zustandes (U, V, W, X) des durch die übertragenen Datenbits (dₖ) bestimmten Pfades durch das Zustandsübergangsdiagramm getroffen und die Entscheidungsergebnisse vom Datendecoder (Dd) als Unterstützungssignale (g'ᵢ) für den Demodulator (Dm) bereitgestellt werden.

2. Verfahren nach Anspruch 1,
dadurch gekennzeichnet, daß für jede Gruppe fortlaufend Maße für die Wahrscheinlichkeit bezüglich der Gruppenzugehörigkeit des aktuellen Zustandes (U, V, W, X) des durch die übertragenen Datenbits (dₖ) bestimmten Pfades durch das Zustandsübergangsdiagramm bestimmt und als Unterstützungssignale (g'ᵢ) bereitgestellt werden.

3. Verfahren nach Anspruch 1, dadurch gekennzeichnet, daß N gleich der Anzahl aller möglichen Zustände (U, V, W, X) ist, so daß jede Gruppe genau einen Zustand enthält.

4. Verfahren nach Anspruch 1, dadurch gekennzeichnet, daß Gütemaße für die Gruppenzugehörigkeitsentscheidungen bestimmt und als zusätzliche Unterstützungssignale bereitgestellt werden.

5. Verfahren nach Anspruch 3, dadurch gekennzeichnet, daß Gütemaße für die Entscheidungen über den wahrscheinlichsten Zustand bestimmt und als zusätzliche Unterstützungssignale bereitgestellt werden.

6. Verfahren nach Anspruch 1 oder 3, dadurch gekennzeichnet, daß die Entscheidungen aus den Metriken der Zustände des der Codierung zugrundeliegenden Zustandsübergangsdiagramms abgeleitet werden.

7. Verfahren nach Anspruch 4 oder 5, dadurch gekennzeichnet, daß die Gütemaße aus den Metriken der Zustände des der Codierung zugrundeliegenden Zustandsübergangsdiagramms abgeleitet werden.

8. Verfahren nach Anspruch 1 oder 2, dadurch gekennzeichnet, daß die Einteilung der Zustände (U, V, W, X) des der Codierung zugrundeliegenden Zustandsübergangsdiagramms in Gruppen (a, b) derart erfolgt, daß mindestens eine Gruppe (a) und ein Kanalsymbol ("1", "3") existiert, so daß dieses Kanalsymbol nicht ausgehend von einem der Zustände (U, W) dieser Gruppe (a) auftreten kann.

9. Verfahren nach Anspruch 1 oder 2, dadurch gekennzeichnet, daß die Einteilung der Zustände (U, V, W, X) des der Codierung zugrundeliegenden Zustandsübergangsdiagramms in Gruppen (a, b) derart erfolgt, daß mindestens eine Gruppe (a) und mindestens ein Kanalsymbol ("1" und/oder "3") existiert, so daß dieses Kanalsymbol nicht hinführend zu einem der Zustände (U, V) dieser Gruppe (a) auftreten kann.

10. Verfahren nach einem der vorhergehenden Ansprüche, dadurch gekennzeichnet, daß mehrere unterschiedliche Gruppeneinteilungen erfolgen, die zu unterschiedlichen Zeitpunkten zyklisch verwendet werden.

11. Verfahren nach einem der vorhergehenden Ansprüche, dadurch gekennzeichnet, daß der Datendecoder (Dd) in einem Empfänger für trellisdecodierte Modulation eingesetzt wird.

12. Verfahren nach einem der vorhergehenden Ansprüche, dadurch gekennzeichnet, daß der Datendecoder (Dd) in einem Empfänger für pragmatische trellisdecodierte Modulation eingesetzt wird.

13. Verfahren nach einem der vorhergehenden Ansprüche, dadurch gekennzeichnet, daß der Datendecoder (Dd) ein Viterbi-Decoder ist.

## Claims

1. Method for limiting the delay time in a control loop comprising demodulator (Dm) and downstream-connected data decoder (Dd) in the case of coded data transmission, by provision of assistance signals for the assistance of the demodulator (Dm) by the data decoder (Dd), characterized in that a number N of groups (a, b), which are not necessarily of identical size, are formed from states (U, V, W, X) of the state transition diagram underlying the coding, in that decisions are continually made with regard to the group association of the current state (U, V, W, X) of the path through the state transition diagram, which path is determined by the transmitted data bits (dₖ), and the decision results are made available by the data decoder (Dd) as assistance signals (g'ᵢ) for the demodulator (Dm).

2. Method according to Claim 1,
characterized in that, for each group, measures of the probability with regard to the group association of the current state (U, V, W, X) of the path through the state transition diagram, which path is determined by the transmitted data bits (dₖ), are continually determined and are made available as assistance signals (g'ᵢ).

3. Method according to Claim 1, characterized in that N is equal to the number of all the possible states (U, V, W, X), with the result that each group contains precisely one state.

4. Method according to Claim 1, characterized in that figures of merit for the group association decisions are determined and are made available as additional assistance signals.

5. Method according to Claim 3, characterized in that figures of merit for the decisions regarding the most probable state are determined and are made available as additional assistance signals.

6. Method according to Claim 1 or 3, characterized in that the decisions are derived from the metrics of the states of the state transition diagram underlying the coding.

7. Method according to Claim 4 or 5, characterized in that the figures of merit are derived from the metrics of the states of the state transition diagram underlying the coding.

8. Method according to Claim 1 or 2, characterized in that the division of the states (U, V, W, X) of the state transition diagram underlying the coding into groups (a, b) is carried out in such a way that at least one group (a) and a channel symbol ("1", "3") exists, with the result that this channel symbol cannot occur proceeding from one of the states (U, W) of this group (a).

9. Method according to Claim 1 or 2, characterized in that the division of the states (U, V, W, X) of the state transition diagram underlying the coding into groups (a, b) is effected in such a way that at least one group (a) and at least one channel symbol ("1" and/or "3") exist, with the result that this channel symbol cannot occur leading to one of the states (U, V) of this group (a).

10. Method according to one of the preceding claims, characterized in that a plurality of different group divisions are effected which are used cyclically at different instants.

11. Method according to one of the preceding claims, characterized in that the data decoder (Dd) is used in a receiver for trellis-decoded modulation.

12. Method according to one of the preceding claims, characterized in that the data decoder (Dd) is used in a receiver for pragmatic trellis-decoded modulation.

13. Method according to one of the preceding claims, characterized in that the data decoder (Dd) is a Viterbi decoder.

## Revendications

1. Procédé pour limiter le temps de retard dans un circuit de régulation comprenant un démodulateur (Dm) et, en aval, un décodeur de données (Dd) pour une transmission de données codées, en fournissant des signaux de soutien pour soutenir le démodulateur (Dm) par le décodeur de données (Dd),
caractérisé en ce qu'
à partir des états (U, V, W, X) du diagramme de transitions d'état à la base du codage, on forme un nombre N de groupes (a, b) non nécessairement de même taille,
on prend en continu des décisions concernant l'appartenance de groupes de l'état actuel (U, V, W, X) du chemin déterminé par les bits de données transmis (dₖ), par le diagramme de transitions d'état, et les résultats de décision du décodeur (Dd) sont fournis comme signaux de soutien (g'ᵢ) pour le démodulateur (Dm).

2. Procédé selon la revendication 1,
caractérisé en ce que
pour chaque groupe on définit en continu des mesures de la probabilité concernant l'appartenance de groupes de l'état actuel (U, V, W, X) du chemin défini par les bits de données à transmettre (dₖ), par le diagramme de transitions d'état, et on fournit cette mesure comme signal de soutien (g'ᵢ) .

3. Procédé selon la revendication 1,
caractérisé en ce que
N est égal au nombre de tous les états possibles (U, V, W, X) de sorte que chaque groupe contient précisément un état.

4. Procédé selon la revendication 1,
caractérisé en ce qu'
on définit des mesures de qualité pour les décisions d'appartenance de groupes, et on les fournit comme des signaux de soutien supplémentaires.

5. Procédé selon la revendication 3,
caractérisé en ce qu'
on définit des mesures de qualité pour les décisions relatives à l'état le plus probable, et on les fournit comme signaux de soutien supplémentaires.

6. Procédé selon l'une des revendications 1 ou 3,
caractérisé en ce qu'
on déduit les décisions à partir des métriques des états du diagramme de transitions d'état à la base du codage.

7. Procédé selon les revendications 4 ou 5,
caractérisé en ce qu'
on déduit la mesure de qualité des métriques des états du diagramme de transition d'état qui est à la base du codage.

8. Procédé selon l'une des revendications 1 ou 2,
caractérisé en ce que
le réglage des états (U, V, W, X) du diagramme de transitions d'état, à la base du codage, se fait en groupe (a, b) pour qu'au moins un groupe (a) et un symbole de canal ("1", "3") existent, de sorte que ce symbole de canal ne peut se produire en partant de l'un des états (U, W) de ce groupe (a).

9. Procédé selon les revendications 1 ou 2,
caractérisé en ce que
la répartition des états (U, V, W, X) du diagramme de transitions d'état, à la base du codage, se fait en groupe (a, b) pour qu'au moins un symbole de canal ("1" et/ou "3") existe, pour que ce symbole de canal ne puisse pas se produire pour conduire à l'un des états (U, V) de ce groupe (a).

10. Procédé selon l'une quelconque des revendications précédentes,
caractérisé en ce qu'
on effectue plusieurs répartitions de groupes différentes utilisées cycliquement à des instants différents.

11. Procédé selon l'une quelconque des revendications précédentes,
caractérisé en ce que
le décodeur de données (Dd) est utilisé dans un récepteur pour une modulation à décodage en treillis.

12. Procédé selon l'une quelconque des revendications précédentes,
caractérisé en ce que
le décodeur de données (Dd) est utilisé dans un récepteur pour une modulation à codage en treillis, pratique.

13. Procédé selon l'une quelconque des revendications précédentes,
caractérisé en ce que
le décodeur de données (Dd) est un décodeur Viterbi.
